# EUROPÄISCHE PATENTSCHRIFT

(11) **EP 3 246 370 B1**
(45) Veröffentlichungstag und Bekanntmachung des Hinweises auf die Patenterteilung: **07.08.2019**
(21) Anmeldenummer: 17170341.6
(22) Anmeldetag: 10.05.2017
(51) Int. Cl.: C09D 151/00

(54) **DIREKT HAFTENDES, TRANSPARENTES HEISSSIEGELBINDEMITTEL ZUR BESCHICHTUNG UND VERSIEGELUNG VON TRANSPARENTEN KUNSTSTOFFFOLIEN**
HEAT-SEALABLE BINDER
LIANTE THERMOSCELLABLE

(30) Priorität: 17.05.2016 EP 16169889
(43) Veröffentlichungstag der Anmeldung: 22.11.2017
(73) Patentinhaber: Evonik Röhm GmbH, 64293 Darmstadt (DE)
(72) Erfinder: Hennig, André, 55218 Ingelheim (DE); Keller, Bruno, 55263 Wackernheim (DE); Hartmann, Jürgen, 64295 Darmstadt (DE); Arnold, Thomas, 63571 Gelnhausen (DE); Waldhaus, Michael, 64354 Reinheim (DE); März, Monika, 63755 Alzenau (DE)
(74) Vertreter: Evonik Patent Association

(56) Entgegenhaltungen:
- WO-A1-2006/134042
- DE-A1- 10 150 898
- DE-A1-102006 009 586
- DE-A1-102014 208 608

## Beschreibung

### Gebiet der Erfindung

Transparente Lebensmittelverpackungen werden in allen Nahrungsmittelbereichen immer wichtiger, da sie dem Verbraucher ermöglichen, das Lebensmittel beim Kauf direkt zu sehen. Die Optik nutzen die Hersteller von Lebensmitteln gezielt, um ihre Produkte besser zu vermarkten. Neben polyolefinischen Materialien (PE, PP, PS) werden immer mehr Verpackungen aus transparentem Polyethylenterephthalat (PET) oder anderen Polyestern, wie Polybutylenterephthalat (PBT), Polymilchsäuren (PLA) oder Polytri-methylenterephthalat (PPT) hergestellt. Um das Verschließen dieser Verpackung sicherzustellen, werden auch transparente Bindemittel benötigt, welche die gewünschte Optik des Lebensmittels nicht beeinträchtigen. Die Versiegelung der Polyesterfolie kann dabei z.B. gegen Polystyrol-, PVC- und Polyester-Behälter erfolgen. Dabei zeichnen sich die Bindemittel neben einer guten Siegelnahtfestigkeiten besonders durch eine gute Transparenz sowie hervorragende Applikationseigenschaft aus.

### Stand der Technik

Zum Verschließen von Kunststoffgefäßen werden in der Lebensmitteltechnologie, insbesondere bei Molkereiprodukten wie Joghurtbechern, neben den etablierten Aluminiumdeckeln überwiegend Deckel aus einem Polyester, insbesondere aus Polymilchsäure (PLA) oder amorphen Polyethylenterephthalat (PET36-Folie) verwendet. Diese Deckel werden zum Verschließen und gleichzeitig zur Aromabarriere des Lebensmittels gegenüber dem Folienmaterial mit einem Siegellack beschichtet eingesetzt.

Dabei besteht schon sehr lange das Bedürfnis im Markt, transparente PET-Folien zu versiegeln. Mit solchen Deckelmaterialien sind neue Erscheinungsbilder der Verpackungen von Lebensmitteln verfügbar. Bei Verwendung von Heißsiegellacken des Standes der Technik ist eine solche Verpackung, mit gleichzeitig sehr guten Siegelnahtfestigkeiten, jedoch noch nicht möglich, da beschriebene Heißsiegelbeschichtungen eine zu geringe Transparenz für solche Anwendungen aufweisen.

Üblicherweise werden PET-Folien mittels Polyvinylacetat bzw. Polyethylen/Polyvinylacetat oder Polyester-Lacken gesiegelt. Zwar sind diese Systeme transparent, weisen jedoch keine optimalen Heißsiegelnahtfestigkeiten auf, müssen zur Haftung an der Folie teilweise mit Haftvermittlern wie PVC-Copolymeren gemischt werden und können nicht gegen verschiedene Bechermaterialien siegeln.

In der DE 35 31 036 werden durch Koextrusion herstellbare Kunststoff-Folien beschrieben, die aus einer siegelfähigen Schicht aus schlagzähem Polystyrol, einem Block-Copolymerisat und einem Gleitmittel bestehen. Auch dieses System ist nicht transparent darstellbar, auch wenn die eigentliche PET-Folie durchaus eine hohe Transparenz aufweist. Darüber hinaus sind coextrudierte Folien bekanntermaßen bezüglich der zu erreichenden Siegelnahtfestigkeiten gegenüber beschichteten Systemen, bei denen der Lack während des Trocknens eine gewünschte Mikrophasenseperation eingehen kann, in Bezug auf eine geringere Siegelnahtfestigkeit weniger bevorzugt.

Die EP 0 406 681 hatte sich zur Aufgabe gesetzt, die nach dem Koextrusionsverfahren gemäß DE 35 31 036 herstellbaren Folien auf Polystyrolbasis u.a. so zu verbessern, dass die Verarbeitungsbreite und die Verarbeitungssicherheit vergrößert werden. Nach der EP 0 406 681 wurden diese Anforderungen erfüllt durch eine nach dem Koextrusionsverfahren oder durch Kaschieren hergestellte siegelfähige Kunststoff-Folie aus zwei Schichten A und C und gegebenenfalls einer Schicht B sowie gegebenenfalls je einer Schicht eines Haftvermittlers D. Solche Systeme sind jedoch nur sehr aufwendig zu realisieren und auch nicht transparent.

EP 1 891 174 und EP 1 989 258 beschreiben wiederum Heißsiegeldispersionen, die sich aus mindestens einem Polyolefin, einem Polymethacrylat, einem Polyester und einem Polyolefin-graft-Polymethacrylat Copolymer zusammensetzen. Dabei enthält die Dispersion gemäß EP 1 891 258 zusätzlich ein Polyester-graft-Polymethacrylat Copolymer. Der Polyolefinanteil beträgt dabei jedoch jeweils mindestens 10 Gew% am Feststoffgehalt der Dispersionen. So ist es zwar auch möglich sowohl Aluminiumfolien, als auch PET-Folien gegenüber Polypropylen (PP) als Bechermaterial zu versiegeln, allerdings weisen die Beschichtungen nahezu keine Transparenz auf und sind aufwendig und damit teuer herzustellen. Dies steht einem breiten Einsatz entgegen.
In EP 2 495 282 ist wiederum eine Heißsiegeldispersion zum Verschließen von PET-Folien gegenüber Polystyrol-Bechern beschrieben. Diese Dispersion weist ausschließlich Polyester, Poly(meth)acrylate und Polyester-graft-Polymethacrylat Copolymere auf. Jedoch hat sich gezeigt, dass diese Dispersionen eine nur verminderte Lagerstabilität aufweisen.

Grundsätzlich lässt sich zu auf einer Lackierung basierenden Heißsiegelschichten sagen, dass keines der bislang kommerziell verfügbaren Bindemittel die Ansprüche an die optischen Eigenschaften erfüllen kann und gleichzeitig die benötigten Siegeleigenschaften, insbesondere Heißsiegelnahtfestigkeiten, universelle Siegelbarkeit bzw. ein angenehmes Öffnungsverhalten sicherstellt. Weiterhin existiert kein transparentes, PVC-freies Bindemittel, welches direkt auf einer Polyesterfolie haftet.

Grundsätzlich können heißsiegelfähige Beschichtungen bevorzugt auch über eine Extrusionstechnologie realisiert werden. Generell können dabei die Eigenschaften Transparenz der Heißsiegelschicht und das sichere Verschließen sehr gut realisieren werden. Dafür werden z.B. Polyolefine, wie PE oder PP, modifizierte Polyolefine, wie EMA, EMAA oder EAA, oder EthylenVinylacetat-Copolymere eingesetzt. Nachteile dieser Technologie sind der komplexe Aufbau der Folien und die damit verbundene schwierige Kontrolle des Herstellprozesses einerseits und andererseits das ungleichmäßige Öffnen derart versiegelter Verpackungen, welches wiederum zu Unzufriedenheit beim Verbraucher führt. Außerdem haften die verschiedenen Siegelschichten nicht direkt auf den verwendeten Folien.

Eine Lackierung hat dagegen den Vorteil des flexibleren Einsatzes bei kleineren Losgrößen und wird deshalb besonders in Europa noch weitgehend eingesetzt. Oft erreicht eine solche Lackierung nur eine unzureichende Transparenz und ist darüber hinaus nur für Aluminium- bzw. PET-Folien geeignet.

Die EP 3 140 360 beschreibt eine Weiterentwicklung der in EP 1 891 174 und EP 1 989 258 beschriebenen Systemen dar, wobei hier der Anteil tertiärer Kohlenstoffatome in der Polyolefin-Komponente höher ist und dadurch z.B. ein höherer Feststoffgehalt erzielt werden kann. Bei diesen Polyolefinkomponenten handelt es sich insbesondere um EPM, hydrierte Polybutadiene oder um Polyolefine mit einem hohen Gehalt längerkettiger alpha-Olefine.

Die DE 101 05 898 beschreibt Heißsiegel-Dispersionen auf Basis von Polyolefinen - insbesondere EPM und/oder EPDM, Polymethacrylaten und deren Prfopfcopolymeren. Diese Systeme weisen keine Polyester oder andere Komponenten auf, die eine Heißsiegelbeschichtung von Polyesterfolien möglich machen würden.

### Aufgabe

Aufgabe der vorliegenden Erfindung war es, durch Entwicklung und Formulierung geeigneter Polymere, PVC-freie Heißsiegellacke zu ermöglichen, die dazu geeignet sind, PET-Folien bzw. PET-beschichtete Folien gegen unterschiedliche Bechermaterialien, insbesondere gegen Polystyrol, Polyester oder PVC, mit einem transparenten Erscheinungsbild zu versiegeln.

Bei den Polyestern des Folienmaterials handelt es sich dabei insbesondere um Papier-Polyethylenterephthalat-Verbundmaterialien, einseitig mit Aluminium kaschierte PET-Folien (AluPET), Polymilchsäure (PLA), sowie Folien aus amorphen Polyethylenterephthalat (z.B. PET36).

Insbesondere war es Aufgabe der vorliegenden Erfindung, dass die Beschichtung mit dem Heißsiegellack auf dem Bechermaterial gegenüber dem Stand der Technik eine deutlich verbesserte Transparenz, bei gleichzeitig hohen Siegelnahtfestigkeiten und einem gelichmäßigen Abzugsverhalten beim Öffnen ("smooth peel") aufweist. Verbesserte Transparenz bedeutet dabei, dass eine solche Schicht in einer für eine Heißsiegelbeschichtung üblichen Auftragsdicke einen Haze kleiner 15%, möglichst kleiner 6% aufweisen soll.

Es bestand darüber hinaus die Aufgabe, dass bei den üblichen Taktzeiten, die bei der Heißsiegelung von Kunststofffolien angewandt werden, ausreichend hohe Festigkeiten des Verschlusses erreicht werden. Dabei soll die mit dem Material beschichtete Folie gegen diverse Materialien, wie insbesondere PET, Polystyrol (PS), PLA oder auch Polypropylen (PP) siegelbar sein.

Dabei soll insbesondere die Verpackung fest verschlossen, aber auch wieder leicht und gleichmäßig zu öffnen sein (so genanntes "smooth & easy peel"). Die Bindemittel müssen neben Dabei soll insbesondere die Verpackung fest verschlossen, aber auch wieder leicht und gleichmäßig zu öffnen sein (so genanntes "smooth & easy peel"). Die Bindemittel müssen neben den Heißsiegeleigenschaften weiterhin eine verarbeitbare dynamische Viskosität zwischen 1000 und 5000 mPas, bei gleichzeitig möglichst hohen Feststoffgehalten von über 35 Gew% aufweisen und preislich wettbewerbsfähig sein.

Weiterhin bestand die Aufgabe, bei der Versiegelung mit dem neu zu entwickelnden Material, hohe Liniengeschwindigkeiten zu erzielen und schnell trocknende Lösungsmittel einsetzen zu können.

Es bestand darüber hinaus auch die Aufgabe, hohe Haftfestigkeit bereits bei relativ hohen Temperaturen direkt nach der Versiegelung zu erreichen, (hohe Wärmestandfestigkeit), da so kurze Zykluszeiten beim Versiegeln der Folie und beim Lebensmittelverpacker erreicht werden.

Weitere nicht explizit genannte Aufgaben ergeben sich aus dem Gesamtzusammenhang der nachfolgenden Beschreibung, Ansprüche und Beispiele.

### Lösung

Die Aufgaben werden gelöst durch ein heißsiegelfähiges, zur Versiegelung verschiedenartiger Untergründe geeignetes Beschichtungssystem, enthaltend eine filmbildende Dispersion, dadurch gekennzeichnet, dass diese Dispersion insgesamt zwischen 25 Gew% und 65 Gew%, bevorzugt zwischen 35 Gew% und 60 Gew% und besonders bevorzugt zwischen 40 Gew% und 55 Gew% einer Mischung aus den Komponenten A, B und C aufweist, wobei der gesamteFeststoffgehalt der Dispersion zwischen 25 und 70 Gew% beträgt. Diese Mischung ist dabei durch folgende Zusammensetzung gekennzeichnet:
zwischen 15 Gew% und 50 Gew%, bevorzugt zwischen 25 Gew% und 45 Gew% und besonders bevorzugt zwischen 30 Gew% und 40 Gew% eines Polyesters oder eines Polyestergemischs als Polymertyp A,
zwischen 15 Gew% und 50 Gew%, bevorzugt 25 Gew% und 45 Gew% und besonders bevorzugt zwischen 30 Gew% und 40 Gew% eines Poly(meth)acrylats oder eines Gemischs aus mehreren Poly(meth)acrylaten als Polymertyp B und
zwischen 15 Gew% und 40 Gew%, bevorzugt 20 Gew% und 35 Gew% und besonders bevorzugt zwischen 25 Gew% und 30 Gew% eines oder mehrerer Kautschuke, aufweisend Styrol-Wiederholungseinheiten als Polymertyp C.

Die Anteile der Komponenten A, B und C in der Mischung sind dabei jeweils bezogen auf die Gesamtmasse der Polymertypen A, B und C. Dabei können die Komponenten A, B und/oder C auch ganz oder teilweise als Pfropfcopolymere AB und/oder CB vorliegen. Bevorzugt besteht die Mischung aus den Polymertypen A, B und C und den daraus gebildeten Pfropfcopolymeren AB und CB.

Insbesondere überraschend wurde gefunden, dass diese Dispersion sehr gute Heißsiegeleigenschaften aufweist und dabei den Polymertyp C enthält. Bei diesem Polymertyp C handelt es sich erfindungsgemäß um ein SEBS, ein bepfropftes SEBS, ein SEB, ein Copolymer, überwiegend bestehend aus Styrol und (Meth)acrylaten mit mindestens 12 Kohlenstoffatomen als Alkylrest, oder um Mischungen aus mindestens zwei dieser Komponenten.

Insbesondere bevorzugt handelt es sich bei den Polymertypen AB und CB um Pfropfcopolymere mit einer Polyester- bzw. Kautschukhauptkette und Poly(meth)acrylatseitenketten. Dabei ist es beispielsweise durchaus möglich, dass die Seitenketten B eines Polyester-pfropf-poly(meth)acrylats AB eine andere Zusammensetzung aufweisen als die auf einen Kautschuk C gepfropften Poly(meth)acrylat-Seitenketten B in einem Pfropfcopolymer CB.

Besonders bevorzugt besteht das geeignete Bindemittel aus einer Mischung von einem hochmolekularen Haftpolyester, einem Kautschuk, einem Polymethacrylat, bestehend aus Methylmethacrylat und Butylmethacrylat, und einem pfropfbarem, mittelmolekularem Polyester (eine Ausführung des Polymertyps A1). Zur Einstellung der Peeleigenschaften kann auch noch ein Weichmacherharz (Tackifier) auf Basis von Polyolefinen oder Polyestern (in diesem Fall als Polymertyp A2) eingesetzt werden. Als Lösemittel eignen sich insbesondere Propylacetat, Essigester, Methylethylekton (MEK) und Mischungen aus diesen. Mit diesem Bindemittel können verschiedene Polyesterfolien, wie mit Aluminium bedampfte PET-Folie (AluPET), Verbundfolie aus Papier und metallisiertem PET und PET-Folien verschiedener Dicken, sowie Aluminiumfolien beschichtet werden und diese mit transparenten PET-Bechern oder transparenten PS-Bechern versiegelt werden. Die Transparenz der beschichteten PET36-Folie liegt im Bereich kleiner 15% Haze, bevorzugt <10%Haze. Die Heißsiegelfestigkeit liegt bei >6,0 N/15 mm bei der PET36 vs. APET Versieglung.

Überraschend wurde gefunden, dass bei den üblichen Taktzeiten, die bei der Heißsiegelung von Kunststofffolien angewandt werden, unter Verwendung der erfindungsgemäßen Dispersion als Heißsiegelbeschichtung ausreichend hohe Festigkeiten des Verschlusses erreicht werden. Es wurde darüber hinaus eine hohe Haftfestigkeit bereits bei relativ hohen Temperaturen direkt nach der Versiegelung und damit verbunden eine hohe Wärmestandfestigkeit erreicht. Damit können kurze Zykluszeiten beim Versiegeln erzielt werden.

Weitere Vorteile der erfindungsgemäßen Zusammensetzung sind eine gute Haftung auf verschiedenen handelsüblichen Polyesterfolien z.B. gegen PS., wie z.B. Mixpap, PET36, AluPET oder sogar auf Aluminiumfolienfolien.

Weitere Vorteile sind im Abziehverhalten beim Öffnen, wie zum Beispiel einem Smooth Peel und dem vollständigen Fehlen von Fadenzug, zu sehen.

Darüber hinaus hat die erfindungsgemäße Beschichtung eine verbesserte Transparenz gegenüber bestehenden Heißsiegel-Beschichtungen, obwohl das reine Bindemittel in Substanz keine verbesserte Transparenz zeigt. Weiterhin sind die erfindungsgemäßen Zusammensetzungen über ein einfacheres Herstellverfahren verfügbar.

### Der Polymertyp A

Grundsätzlich ist die Auswahl der für die erfindungsgemäße Beschichtungszusammensetzung geeigneten Polyester des Polymertyps A für den Fachmann leicht zu treffen. Dabei ist das Spektrum der verwendbaren Polyester sehr breit. Auswahlkriterien, die der Fachmann hinzuziehen kann sind insbesondere die Löslichkeit des Polyesters in dem jeweiligen Lösungsmittel und - für Anwendungen mit Lebensmittelkontakt - die entsprechende lebensmittelrechtliche Zulassung dieser Komponente.

Als Polymertyp A können erfindungsgemäß bevorzugt einerseits Copolyester verwendet, die sich durch Itaconsäure als Monomerbaustein auszeichnen (Polyester A1). Andererseits sind erfindungsgemäß genauso bevorzugt Polyester im Einsatz, die frei von Monomeren sind, welche polymerisationsfähige Doppelbindungen enthalten, und deren zahlenmittleres Molekulargewicht (Mₙ) größer als 5000 g/mol ist (Polyester A2) und somit die Haftung zur PET-Folie hervorrufen.

In einer besonders bevorzugten Ausführungsform der vorliegenden Erfindung handelt es sich bei dem Polymertyp A um eine Mischung aus dem Polyester A1 mit einem zahlenmittleren Molekulargewicht Mₙ zwischen 700 und 5000 g/mol, bevorzugt zwischen 2000 und 4000 g/mol, der unter Copolykondensation von Itaconsäure hergestellt wurde, und dem Polyester A2 mit einem zahlenmittleren Molekulargewicht Mₙ zwischen 5000 und 50000 g/mol, bevorzugt zwischen 10000 und 35000 g/mol, der keine Doppelbindungen aufweist. Dabei enthält die optionale Komponente des Polymertyps AB ausschließlich Polyester A1 als Polymertyp A.

Insbesondere enthält dieses bevorzugte Beschichtungssystem bezogen auf die Gesamtmasse der Polymertypen A, B und C, inklusive der optionalen Bestandteile AB und CB, einschließlich der Anteile des Polyesters A1 in Polymertyp AB, zwischen 1 und 15 Gew%, bevorzugt zwischen 5 und 12 Gew%, ganz besonders bevorzugt zwischen 7 und 10 Gew%.des Polyesters A1 und zwischen 10 und 50 Gew%, bevorzugt zwischen 20 und 40 Gew%, ganz besonders bevorzugt zwischen 25 Gew% und 35 Gew% des Polyesters A2.

Alternativ zu dieser besonders bevorzugten Ausführungsform kann das Beschichtungssystem auch andere Polymertypen A enthalten, bei denen es sich ganz oder auch nur teilweise um einen Polyester handelt, der unter Copolykondensation von Itaconsäure hergestellt wurde und für den besonders bevorzugt die gleichen Eigenschaften gelten, wie zuvor für den Polyester A1 beschrieben. Weiterhin können alternativ auch alle eingesetzten Polyester keine Doppelbindungen aufweisen und damit beispielsweise keiner Bepfropfung zur Verfügung stehen. Ein solches, gleichsam erfindungsgemäßes System würde dann keine Pfropfcopolymere AB aufweisen. Darüber hinaus sind auch weitere, die anderen an den Polymertyp gestellten Erfordernisse erfüllende Varianten denkbar.

Bevorzugt haben die Polyester A1 eine lineare oder verzweigte Struktur und sind gekennzeichnet durch eine OH-Zahlen von 20 bis 150 mg KOH/g, vorzugsweise von 25 bis 50 mg KOH/g, eine Säurezahlen von unter 10 mg KOH/g, bevorzugt unter 5 mg KOH/g und besonders bevorzugt unter 2 mg KOH/g und ein zahlenmittleres Molekulargewicht von 700 bis 5.000 g/mol, vorzugsweise von 2000 bis 4000 g/mol. Die Hydroxylzahl (OHZ) wird bestimmt nach DIN 53240-2. Die Säurezahl wird bestimmt nach DIN EN ISO 2114. Das Molekulargewicht wird bestimmt mittels Gelpermeations-chromatographie (GPC). Die Charakterisierung der Proben erfolgte in Tetrahydrofuran als Eluent nach DIN 55672-1.

Der Gehalt an Itaconsäure in den Polyestern A1 kann insbesondere im Bereich zwischen 0,1 Mol% und 20 Mol%, bevorzugt zwischen 1 Mol% und 10 Mol% und ganz besonders bevorzugt zwischen 2 Mol% und 8 Mol%, bezogen auf die Gesamtmenge an eingesetzten Polycarbonsäuren, liegen. Ansonsten ist die Art der für die erfindungsgemäßen Copolyester eingesetzten Polycarbonsäuren an sich beliebig. So können aliphatische und/oder cycloaliphatische und/oder aromatische Polycarbonsäuren enthalten sein. Unter Polycarbonsäuren sind Verbindungen zu verstehen, die bevorzugt mehr als eine und besonders bevorzugt zwei Carboxylgruppen tragen; abweichend von der allgemeinen Definition sind in besonderen Ausführungsformen auch Monocarbonsäuren darunter zu verstehen.

Beispiele für aliphatische Polycarbonsäuren mit kürzeren Ketten sind Bernsteinsäure, Glutarsäure, Adipinsäure, Azelainsäure, Sebacinsäure, Dodecandisäure, Tetradecandisäure, Octadecandisäure. Beispiele für cycloaliphatische Polycarbonsäuren sind die Isomere der Cyclohexandicarbonsäure. Beispiele für aromatische Polycarbonsäuren sind die Isomere der Benzoldicarbonsäure und Trimellitsäure. Gegebenenfalls können an Stelle der freien Polycarbonsäuren auch ihre veresterbaren Derivate wie z. B. entsprechende Niedrigalkylester oder cyclische Anhydride eingesetzt werden.

Die Art der für die erfindungsgemäßen Hydroxylpolyester eingesetzten Polyole ist an sich beliebig. So können aliphatische und/oder cycloaliphatische und/oder aromatische Polyole enthalten sein.

Unter Polyolen sind Verbindungen zu verstehen, die bevorzugt mehr als eine und besonders bevorzugt zwei Hydroxylgruppen tragen; abweichend von der allgemeinen Definition sind in besonderen Ausführungsformen auch Monohydroxyverbindungen darunter zu verstehen.

Beispiele für Polyole sind Ethylenglykol, Propandiol-1,2, Propandiol-1,3, Butandiol-1,4, Pentandiol-1,5, Hexandiol-1,6, Nonandiol-1,9, Dodecandiol-1,12, Neopentyl-glykol, Butylethylpropandiol-1,3, Methylpropandiol-1,3, Methylpentandiole, Cyclo-hexandimethanole, Trimethylolpropan, Pentaerythrol und Mischungen daraus.

Unter aromatischen Polyolen sind Umsetzungsprodukte von aromatischen Polyhydroxyverbindungen wie z. B. Hydrochinon, Bisphenol A, Bisphenol F, Dihydroxynaphthalin etc. mit Epoxiden wie z. B. Ethylenoxid oder Propylenoxid zu verstehen. Als Polyole können auch Etherdiole, d. h. Oligomere bzw. Polymere, z. B. auf Basis Ethylenglykol, Propylenglykol oder Butandiol-1,4 enthalten sein. Besonders bevorzugt sind lineare aliphatische Glykole.

Neben Polyolen und Dicarbonsäuren können auch Lactone für die Synthese der Hydroxylpolyester verwendet werden.

Die erfindungsgemäßen Polyester A1 werden mittels etablierter Techniken für (Poly-)Kondensationsreaktionen hergestellt.

Die gleichsam bevorzugten Polyester A2 im Sinne der Erfindung haben insbesondere eine lineare, gegebenenfalls leicht verzweigte Struktur und sind bevorzugt gekennzeichnet durch eine OH-Zahl von 1 bis 15 mg KOH/g, vorzugsweise von 5 bis 10 mg KOH/g, eine Säurezahl von unter 10 mg KOH/g, bevorzugt unter 5 mg KOH/g und besonders bevorzugt unter 2 mg KOH/g und ein zahlenmittleres Molekulargewicht Mₙ zwischen 5.000 und 50.000 g/mol, vorzugsweise zwischen 10000 und 35000 g/mol. Weiterhin ist es besonders vorteilhaft, wenn die Polyester A2 einen Glaspunkt (T_{g}) im Bereich von 25 bis 45°C, vorzugsweise von 30 bis 35 °C aufweisen. Der Glaspunkt wird mittels DSC (Differential Scanning Calorimetry) nach DIN EN ISO 11357-1 gemessen. Die angegebenen Werte werden einem zweiten Aufheizzyklus entnommen.

Wesentlich bei den Materialien vom des Typs Polyester A2 ist, dass keine Monomere verwendet werden, welche mit (Meth)acrylaten polymerisationsfähige Doppelbindungen enthalten, also z.B. frei von Itaconsäure sind.
Ansonsten können generell zur Herstellung vom Polymertyp A Typ 2 die gleichen Monomere verwendet werden, die bei der Beschreibung des Typ 1 bereits genannt sind.

### Der Polymertyp B

Der Polymertyp B kann beispielsweise bei der Herstellung der erfindungsgemäßen Dispersion neben dem Pfropfcopolymer AB gebildet werden. Die Zusammensetzung solcher B-Ketten in dem optionalen Produktbestandteil AB entspricht ebenfalls der folgenden Beschreibung. Das gleiche gilt für die B-Ketten eines optionalen Bestandteils CB. Dabei können die einzelnen Komponenten B sich durchaus voneinander unterscheiden und/oder gleich mehrere verschiedene Polymere der Zusammensetzung B nebeneinander vorliegen. Bevorzugt gilt für die Zusammensetzung aller dieser Bestandteile B das folgende:
Polymertypen B bestehen definitionsgemäß aus Polyacrylat- und/oder Polymethacrylat-Sequenzen. Diese sind für sich genommen, z. B. in Form eines entsprechenden Homo- oder Copolymerisats im Lösungsmittelsystem L löslich. Das Polymerisat B ist im Allgemeinen aus Standart Methacrylaten und optional Acrylaten aufgebaut. Insbesondere ist Polymertyp B aus MMA, Butyl(meth)acrylat, Ethyl(methacrylat und/oder Propyl/meth)acrylat aufgebaut. Dabei steht die Formulierung (Meth)acrylat für Methacrylate, Acrylate oder Mischungen aus Methacrylaten und Acrylaten. Andere geeignete Monomere für den Polymertyp B können beispielsweise in EP 1 989 258 nachgelesen werden, wobei die gleichfalls dort aufgeführten funktionellen Monomere sich erfindungsgemäß auf OH-, Säure- und Silyl-Funktionalitäten beschränken.

Besonders bevorzugt handelt es sich bei dem Polymertyp B um ein Copolymer, welches durch die Copolymerisation einer Monomermischung erhalten wird. Besonders bevorzugt besteht diese Polymermischung dabei aus Komponenten, die ausgewählt sind aus (Meth)acrylsäure, Hydroxyethyl(meth)acrylat, Hydroxypropyl(meth)acrylat, Methyl(meth)acrylat, n- und/oder iso-Proyl(meth)acrylat, n-Butyl(meth)acrylat und C8- bis C22-Fettalkoholestern der (Meth)acrylsäure.

Ganz besonders bevorzugt besteht Polymertyp B zu mehr als 50 Gew%, vorzugsweise zu 80 Gew% bis 100 Gew% aus MMA und/oder Butylmethacrylat.

Um die Heißsiegelfestigkeit in Bezug auf besondere Materialien zusätzlich zu erhöhen können in bis zu 20 Gew%, bevorzugt bis zu 10 Gew% und besonders bevorzugt zu 0 bis 5 Gew% funktionelle Monomere einpolymerisiert sein. Bei diesen funktionellen Monomeren kann es sich z.B. um Säuren, insbesondere um Acrylsäure, Methacrylsäure oder Itaconsäure handeln. Etwas weniger bevorzugt sind Monomere mit einer OH-Gruppe, wie insbesondere 2-Hydroxyethyl(meth)acrylat oder 3-Hydroxypropyl(meth)acrylat.

Polymertyp B kann weiterhin zur Einstellung des gewünschten Molekulargewichtsbereichs Regler enthalten. Als Beispiele für schwefelhaltige Regler seien z.B MTMO, (3-Mercaptopropyl) trimethoxysilan, n-DDM (n-Dodecylmercaptan) genannt.

Im Einzelnen wird das Polymer B nach Anteil und Zusammensetzung zweckmäßigerweise im Hinblick auf die gewünschte technische Funktion gewählt werden.
Insbesondere kann Komponente B auch als Mischung verschiedener Poly(meth)acrylate vorliegen, wobei nur eine dieser verschiedenen (Meth)acrylatzusammensetzungen die Bestandteile B der Polymerkomponente AB bzw. CB bildet.

### Der Polymertyp C

Bei dem Polymertyp C handelt es sich erfindungsgemäß um ein SEBS, ein mit Acrylsäure, Methacrylsäure. Maleinsäure und/oder Maleinsäureanhydrid bepfropftes SEBS, ein SEB, ein Copolymer, überwiegend bestehend aus Styrol und (Meth)acrylaten mit mindestens 12 Kohlenstoffatomen als Alkylrest, oder um Mischungen aus mindestens zwei dieser Komponenten.

Bei der Komponente C handelt es sich bevorzugt um ein SEBS, um ein mit Acrylsäure, Methacrylsäure. Maleinsäure und/oder Maleinsäureanhydrid bepfropftes SEBS, um ein Mischung aus SEBS und SEB oder um ein Copolymer, überwiegend bestehend aus Styrol, sowie (Meth)acrylatestern eines Fettalkohols mit mindestens 12 Kohlenstoffatomen oder eines hydrierten, hydroxy-terminierten Polybutadiens handelt. Letztere Alternative hat sich als besonders vorteilhaft erwiesen, wenn es sich um den Ester eines hydrierten, hydroxypropyl-terminierten Polybutadiens handelt.

Unabhängig von der sonstigen Zusammensetzung des Polymertyps C hat es sich als besonders vorteilhaft erwiesen, wenn Komponente C einen Anteil an Styrol-Wiederholungseinheiten zwischen 8 und 45 Gew%, bevorzugt zwischen 10 und 35 Gew% aufweist.

Unabhängig davon, wie auch zusätzlich dazu hat es sich als besonders vorteilhaft erwiesen, wenn die Komponente C einen Schmelzflussindex, gemessen unter 5 kg bei einer Temperatur von 200 °C gemäß ISO 1133-1 zwischen 1 und 40 g/10 min, bevorzugt zwischen 4 und 10 g/10 min aufweist. Der Schmelzflussindex ist ein relativ einfach und genau bestimmendes Maß, welches die entscheidende Kombination aus Kettenlänge, Kettenlängenverteilung und Mikrostruktur der Polymere des Polymertyps A wiedergibt. Diese Eigenschaften und die Kombination daraus scheinen überraschend auch einen Einfluss auf die Heißsiegeleigenschaften zu haben.

Bei SEBS handelt es sich um ein Triblockcopolymer, dessen äußeren Blöcke ganz oder überwiegend aus Styrolwiederholungseinheiten gebildet sind. Der Mittelblock dagegen ist ein Mischpolymerisat, überwiegend oder ganz bestehend aus Ethylen- und Butenwiederholungseinheiten.

Bei SEB handelt es sich analog dazu um ein Diblockcopolymer, welches nur einen Block, der überwiegend oder ganz aus Styrol-Wiederholungseinheiten zusammengesetzt ist, aufweist.

Sowohl SEB als auch SEBS sind als reine Polymere kommerziell verfügbar. Ein Beispiel für ein reines SEBS ist Kraton G-1650 E der Firma Kraton. Oft werden beide Polymere jedoch auch als Mischung aus SEBS und SEB vertrieben. Besonders geeignete Beispiele sind Kraton G-1657 mit einem SEB-Anteil von ca. 30 Gew% und Kraton G-1726 mit einem SEB-Anteil von ca. 70 Gew%.

### Der Polymertyp AB

### Herstellung der optional vorliegenden Pfropfpolymerisate AB

Das erfindungsgemäße Verfahren zur Herstellung eines Pfropfcopolymerisats AB zeichnet sich dadurch aus, dass durch Reaktion eines geeigneten, weiter unten beschriebenen Initiators mit bepfropfbaren Gruppen, insbesondere mit Doppelbindungen von Itaconsäurewiederholungseinheiten im Polymer des Typs A reaktive Zentren für eine radikalische Polymerisation von (Meth)acrylaten gebildet werden. Mit reaktiven Zentren sind Polymerketten gemeint, die eine oder mehrere Initiatoreinheiten für eine radikalische Polymerisation aufweisen. Diese Initiatoreinheiten können simultan oder auch zeitlich versetzt gebildet werden. Somit können Itaconsäureeinheiten auch durchaus erst aktiviert werden, nachdem andere die an anderen Itaconsäuren gebildeten Radikale durch Abbruchreaktionen deaktiviert wurden.

Das Pfropfpolymerisat AB wird in der Regel hergestellt, indem man auf der Komponente A Monomere, die zur Komponente B führen, unter den dafür geeigneten Reaktionsbedingungen aufpfropft. Der Polymertyp AB ist entsprechend bevorzugt ein Pfropfcopolymer mit einer Polyesterhauptkette und einer Poly(meth)acrylatseitenkette.

Beispielsweise stellt man eine 10 bis 65 gew%ige, vorzugsweise 30 bis 45 gew%ige Lösung eines Itaconsäure haltigen Polyesters in einem geeigneten, unter Polymerisationsbedingungen inerten Lösungsmittel, das im Normalfall einen Siedepunkt oberhalb der Verfahrenstemperatur besitzt, her. Als Lösungsmittel kommen z.B. Essigester wie Ethyl-, Propyl- oder Butylacetat, aliphatische Lösungsmittel wie Isooctan, cycloaliphatische wie Cyclohexan und carbonylische wie Butanon in Frage.
Zu diesen Polyester-Lösungen gibt man die Monomeren, die zum Polymertyp B führen, zu und polymerisiert unter Zusatz eines oder mehrerer, vorzugsweise peroxidischer Radikal-Initiatoren bei Temperaturen von -10 °C bis 100 °C innerhalb von gewöhnlich 4 bis 8 Stunden. Anzustreben ist ein möglichst vollständiger Umsatz. Vorzugsweise finden Azoverbindungen wie AIBN oder Perester wie tert.-Butylperoctoat als Radikalinitiator Verwendung. Die Initiatorkonzentration richtet sich nach der Zahl der gewünschten Pfropfstellen und dem gewünschten Molekulargewicht des Segments B. Im Allgemeinen liegt die Initiatorkonzentration zwischen 0,1 und 3 Gew%, bezogen auf das Polymerisat.

Gegebenenfalls können zur Einstellung des gewünschten Molekulargewichts der Segmente B noch Regler mitverwendet werden. Als Regler eignen sich z. B. Schwefelregler, insbesondere mercaptogruppenhaltige Regler, z.B. die im Kapitel zu Polymertyp B beschriebenen Regler. Die Konzentrationen an Reglern liegen im Allgemeinen bei 0,1 Gew.-%, bis 1,0 Gew.-%, bezogen auf das Gesamtpolymerisat.

Neben der beschriebenen Methode der Lösungspolymerisation kann die Synthese der Pfropfcopolymere des Polymertyps AB auch in Substanz vorgenommen werden. Dazu werden die Polyester vor der Initierung der radikalischen Polymerisation in der (meth)acrylischen Monomermischung gelöst.
Alternativ kann Radikal-Initiator auch in einer Schmelze des Polyesters vorgelegt und anschließend mit der Monomermischung versetzt werden.

### Der Polymertyp CB

Das Pfropfpolymerisat CB wird in der Regel hergestellt, indem man - optional mit Hilfe eines geeigneten Emulgators - eine Dispersion aus der Komponente C herstellt und auf diese Monomere, die zu Polymertyp B führen, unter den dafür geeigneten Reaktionsbedingungen aufpfropft. Die Verfahren zur Herstellung geeigneter Emulgatoren vom Typ CB sind an sich bekannt. So kann z. B. nach der Methode der Übertragungspfropfung vorgegangen werden: (Vgl. auch Houben-Weyl, Methoden der Org. Chemie, Bd. 1411, S. 114, H.A.J. Battaerd, G.W. Tregear, Polymer Reviews, Vol. 16, Interscience (1967)).

Beispielsweise stellt man eine 10 bis 50 gew%ige, vorzugsweise 20 bis 40 gew%ige Lösung eines Polymers des Polymertyps C in einem geeigneten, unter Polymerisationsbedingungen inerten Lösungsmittel her, das im Normalfall einen Siedepunkt oberhalb der Verfahrenstemperatur besitzt. Als Lösungsmittel kommen z.B. Butylacetat, aliphatische cycloaliphatische und aromatische Kohlenwasserstoffe, sowie Mischungen aus diesen, in Frage. Zu diesen Lösungen gibt man die Monomeren in den gewünschten Verhältnissen und polymerisiert unter Zusatz eines oder mehrerer, vorzugsweise peroxidischer Radikal-Initiatoren bei Temperaturen von 50 °C bis 120 °C innerhalb von gewöhnlich 4 bis 8 Stunden. Anzustreben ist ein möglichst vollständiger Umsatz. Vorzugsweise finden Perester wie tert.-Butylperoctoat Verwendung. Die Initiatorkonzentration richtet sich nach der Zahl der gewünschten Pfropfstellen und dem gewünschten Kettelängen der Segmente B. Im Allgemeinen liegt die Initiatorkonzentration zwischen 0,2 und 3,0 Gew%, bezogen auf das Polymerisat.

Gegebenenfalls können zur Einstellung des gewünschten Molekulargewichts der Segmente B noch Regler mitverwendet werden. Als Regler eignen sich z. B. Schwefelregler, insbesondere mercaptogruppenhaltige Regler, wie sie in dem Kapitel zu Polymertyp B aufgeführt sind. Die Konzentrationen an Reglern liegen im Allgemeinen bei 0,1 bis 1,0 Gew%, bezogen auf das Gesamtpolymerisat. Eine weitere Methode zur Herstellung der Pfropfpolymerisate CB stellt die Hydroperoxidation eines Polyolefins als ersten Schritt dar. Die auf diese Weise gebildeten, kettenständigen Hydroperoxydgruppen können in einer folgenden Stufe die Pfropfpolymerisation der Vinylmonomeren initiieren. (Vgl. H.A.J. Battaerd, G.W. Tregear, Polymer Reviews loc. cit.).

In einer besonderen Ausführung kann Polymertyp B gleichzeitig auf Polymertyp A und auf Polymertyp C aufgepfropft werden, um die Pfropfcopolymere AB und CB darzustellen. Dabei weisen die Seitenketten B die gleiche (statistische) Zusammensetzung auf. Dazu werden parallel Homopolymere des Polymertyps B gebildet.

Die Polymertypen AB und CB können alternativ auch abgemischt werden, wobei die simultane Synthese bevorzugt wird, da somit eine stabilere Dispersion dargestellt wird. Das Problem der Phasentrennung kann gegenüber einer einfachen Abmischung vermindert werden.

In einer dritten Alternative erfolgt die Synthese des Polymertyps AB in Gegenwart des bereits bepfropften Polymertyps CB, des nicht bepfropften Polymertyps C und des bei der Synthese von Polymertyp CB gebildeten Polymertyps B. Bei diesem Vorgehen kann es zu Bildung zusätzlicher Seitenketten an Polymertyp CB und zur Bildung zusätzlicher Polymere CB kommen. Damit ist es sogar möglich, dass Polymertyp CB mit unterschiedlich zusammengesetzten Seitenketten B vorliegt.

Analog und unter analogen Effekten kann auch die Synthese des Polymertyps CB in Gegenwart von den Polymertypen AB, A und B erfolgen.

Die erfindungsgemäße Beschichtungszusammensetzung kann neben den ausgeführten Polymertypen A, B, AB, C und CB auch weitere Komponenten, wie zum Beispiel Haftvermittler, Stabilisatoren, Abriebsverbesserer oder Antioxidantien enthalten. Beispiele für solche Zuschlagsstoffe auf polymerer Basis sind die Polyertypen E und E_{A}.

Zur Verbesserung der Aluminium-Haftung ist eine Formulierung mit Polymertyp E eine Option: Durch eine Grundierung der Folie oder durch Zugabe von 0,1 bis 10 Gew%, besser von 0,1 bis 5 Gew% eines haftverbessernden Terpolymers in die Lackformulierung kann eine Verbesserung der Al-Haftung beobachtet werden. Eingesetzt wird z.B. VINYLITE® VMCH (Vertrieb durch Union Carbide).

Polymertyp E_{A} kann optional zur Verminderung eines möglichen Abriebes in der Verarbeitung zugesetzt werden. Eingesetzt werden kann beispielsweise ein Polyamid, z.B. des Typs VESTOSIND® 2159 (Fa. Evonik Ind. AG). Dieser kann in einem Formulierungsanteil zwischen 0,1 und 10 Gew%, besser zwischen 0,1 und 5 Gew% zugegeben werden.

### Das Lösungsmittelsystem

Neben den Polymertypen A, B und C und den optionalen Pfropfpolymeren AB und CB, sowie weiteren optionalen Zuschlagsstoffen, befindet sich noch ein Lösungsmittelsystem L in der erfindungsgemäßen Beschichtungszusammensetzung.

Die für das Lösungsmittelsystem L zu verwendenden Lösungsmittel sind so auszuwählen, dass sie den Erfordernissen der Beschichtungstechnologie für Kunststoffe und Metalle entsprechen. Die - gegebenenfalls im Gemisch - anzuwendenden Lösungsmittel sollen inert und im Ganzen unbedenklich sein, wobei der Siedepunkt 105 °C bei 760 Torr möglichst nicht überschreitet.

Als Lösungsmittel kommt beispielsweise ein Gemisch aus Estern aliphatischer Carbonsäuren mit aliphatischen Alkoholen, Ketonen und aliphatischen Kohlenwasserstoffen in Frage. Beispiele für aliphatische Carbonsäuren sind Essigsäure oder Propinsäure. Als aliphatische Alkohole kommen Ethanol, Propanol, Isopropanol, n-Butanol, 2-Butanol, 2-Methyl-1-propanol oder 2-Methyl-2-propanol in Frage. Geeignete Beispiele für Ketone sind z.B. Aceton oder Ethylmethylketon. Als aliphatische Kohlenwasserstoffe dienen insbesondere Pentan, Hexan, Heptan, Oktan, iso-Octan, Nonan, Decan, Undecan und Dodecan als Beispiele. Die aliphatischen Kohlenwasserstoffe können auch in Form ihrer Isomerengemische und in Gemischen untereinander vorliegen. Es können auch Cycloalkane und substituierte Cycloalkane eingesetzt werden.

Auch Gemische aus den vorstehend beschriebenen Lösungsmitteln kommen für das Trägersystem infrage. Der Anteil des Lösungsmittelsystems an den erfindungsgemäß konzentrierten Polymerisatdispersionen kann z. B. 75 Gew%, in besonders günstigem Fall bis herab zu 30 Gew% betragen, vorzugsweise unter 67 Gew%, praktisch meist 55 Gew% bis 40 Gew%.

Dem heißsiegelfähigen, zur Versiegelung verschiedenartiger Untergründe geeigneten Beschichtungssystem können darüber hinaus, wie beschrieben, die für das Heißsiegeln üblichen Hilfs- und Zusatzstoffe zugefügt werden.

Überraschend wurde gefunden, dass erst die richtige Kombination der drei sowohl physikalisch als auch optisch unverträglichen Materialien A, B und C zu einer ausreichend transparenten Beschichtung auf transparenten Polyesterfolien für Lebensmittel führt. Stellt man eine Beschichtung auf einer transparenten Polyesterfolie entweder jeweils aus den einzelnen Materialien oder aus der Mischung zweier Materialien her, so wird in keinem Fall die gesamte Kombination aller Eigenschaften erreicht. Eine Beschichtung auf Basis des Polymertyps A beispielsweise weist noch eine ausreichende Haftung und sehr gute Transparenz auf Polyesterfolien (PET36) und gewisse Siegeleigenschaften gegen amorphes Polyesterbechermaterial (APET) auf, allerdings geht die Versieglung gegen Polystyrol (PS) vollständig verloren. Die Polymertypen B und C zeigen erst gar keine ausreichenden Haftungseigenschaften auf PET36-Folie.

Bevorzugt sind Mischungen, die neben den Polymertypen A, B und C zumindest eines der Pfropfcopolymere AB oder CB, besonders bevorzugt AB und CB enthält. Mischt man alle drei Polymertypen bei erhöhter Temperatur (80°C), ohne Zugabe von solchen Pfropfcopolymeren zusammen, kommt es oft vor, dass sich die erhaltene organische Dispersion nach dem Abfüllen entmischen kann. Eine solche Dispersion kann dann nicht ohne erneuten Mischvorgang als Bindemittel auf die Folien aufgetragen werden.

Erst durch die erfindungsgemäße Ausführung kann die benötigte Funktionalität des Bindemittels hergestellt werden. Dazu wird zur Verträglichkeitsvermittlung der drei Polymertypen bevorzugt ein Itaconsäure-haltiger Polyester vom Polymertyp A eingesetzt, auf den besonders bevorzugt während der Herstellung die (Meth)acrylatmonomere gepfropft werden. Weiterhin bevorzugt wird durch eine partielle Pfropfung von (Meth)acrylat-Monomeren auf den Polymertyp C eine weitere Verträglichkeitskomponente generiert, so dass im idealsten Fall am Ende der Herstellung alle drei Polymertypen in organischen Lösemitteln nebeneinander vorliegen und sich nicht aufgrund der unterschiedlichen Dichten und Polaritäten entmischen können. Auf der anderen Seite wird durch den Einsatz des Polymertyps C, insbesondere durch die langkettigen, aliphatischen Polymerketten, im getrockneten Lack eine Mikrophasensepartion hervorgerufen. Insbesondere die Separation des Polymertyps A ist überraschenderweise dafür verantwortlich, dass ausreichend viele Haftungsgruppen für die Anbindung an die Filme, insbesondere die Polyester-basierten, zur Verfügung stehen. Auf der anderen Seite darf die Phasenseparation nicht zu einer optisch sichtbaren Trübung der transparenten Verpackungsfilme führen. Durch den Einsatz von Styrolbasierten Kautschuken, insbesondere von SEBS-Materialien, oder Mischungen aus SEB- und SEBS-Materialien, oder mit Acrylsäure, Methacrylsäure, Maleinsäure oder Maleinsäureanhydrid gepfropfte SEBS-Kautschukmaterialien wird erreicht, dass der Unterschied in den optischen Eigenschaften zwischen Polyestern und Poly(meth)acrylaten auf der einen Seite und Ethylen-Buten-Bestandteilen auf der anderen Seite verringert wird. Dabei ermöglichen die Styrol-haltigen Blöcke der Polymere eine optische und physikalische Verträglichkeit mit den verwendeten Polyestern und Poly(meth)acrylaten. Durch die chemische Bindung der Styrol-haltigen Blöcke an die polyolefinischen Strukturen des Polymertyps C wird die Kombination der Phasenseparation und der optischen Verträglichkeit der Polymertypen A, B und C sichergestellt. Durch das gleiche Funktionsprinzip kann mit den Bindemitteln auch eine Haftung auf unpolaren Filmen, wie beispielweise biaxial gereckte Polypropylen-Filme (BOPP), sowie ein Versieglung gegen Polypropylen-Bechermaterialien (PP) erreicht werden. Dabei sorgen die separierten, unpolaren Polymerbestandteile des Polymertyps C für die beschriebene Haftung und Siegeleigenschaften.

Somit ergibt sich letztendlich durch das erfindungsgemäße System überraschend auch der Vorteil, dass eine Versiegelung ohne Zugabe von Haftvermittlern, besonders ohne die Zugabe von Haftvermittlern auf Polyvinylchloridbasis (PVC) oder auf Polyesterbasis, erfolgen kann, und dass trotzdem gegenüber PS- und PET-Behältern zumindest vergleichbare, teilweise verbesserte Barriere- und Siegeleigenschaften erreicht werden als mit bereits im Markt erhältlichen Heißsiegelsystemen. Gleichzeitig ist die Forderung erfüllt sein, dass sich die Deckelfolie leicht wieder vom Becher abziehen lässt ("smooth peel").

Neben der beschriebenen Beschichtungszusammensetzung ist zugleich auch ein Verfahren zur Versiegelung von zwei Materialien mit Hilfe der erfindungsgemäßen Beschichtungszusammensetzung Bestandteil der vorliegenden Erfindung.

Insbesondere zeichnet sich dieses Verfahren zur Versiegelung von Polyesterfolien bzw. PET-beschichteten Folie gegen Polystyrol, Polyester und Polyvinylchlorid dadurch aus, dass die Folie mit der erfindungsgemäßen Beschichtungssystem beschichtet, die Beschichtung getrocknet, die beschichtete Seite der Folie auf das zu versiegelnde Material aus Polystyrol, Polyester oder PVC aufgelegt und bei einer Temperatur zwischen 120 und 220 °C und einem Druck zwischen 1 und 6 mPas über einen Zeitraum zwischen 0,1 und 1,5 s versiegelt wird.
Die Trocknung kann dabei im Unterdruck, bevorzugt bei einer Temperatur oberhalb der höchsten Siedetemperatur der Komponenten des Lösungsmittelsystems erfolgen.

Nach dem erfindungsgemäßen Verfahren werden heißsiegelfähige Beschichtungsmassen in Dispersion erhalten, die eine ausreichende Stabilität für den Verarbeitungsprozess besitzen. Die Stabilität der Dispersionen beträgt mindestens mehrere Tage, im Normalfall mehrere Wochen bis Monate.

Damit ergeben sich viele Einsatzgebiete für die erfindungsgemäßen Beschichtungssysteme. Hervorzuheben sind die Verwendungen von Beschichtungssystemen nach Anspruch 1, die Polyesterfolien bzw. PET-beschichtete Folien gegen Polystyrol, Polyester und Polyvinylchlorid heißsiegeln können. Beschichtungssyteme gemäß der Ansprüche 4 und 13 finden Verwendung beim Heißsiegeln von Polyesterfolie aber auch Aluminiumfolie bzw. sowohl Aluminium- als auch PET-beschichteten Folien gegen Polystyrol, Polyester und Polyvinylchlorid. Die Beschichtungssysteme nach Anspruch 2, 11 und 15 finden Anwendung beim Heißsiegeln von Polyesterfolie aber auch Aluminiumfolie bzw. sowohl Aluminium- als auch PET-beschichteten Folien gegen Polystyrol, Polyester und Polyvinylchlorid.

### Beispiele

Die im Folgenden gegebenen Beispiele werden zur besseren Veranschaulichung der vorliegenden Erfindung gegeben, sind jedoch nicht dazu geeignet, die Erfindung auf die hierin offenbarten Merkmale zu beschränken.

### Materialien:

### Verwendetes Folienmaterial:

Papier/Aluminium/Polyesterfolienverbund-Folie (z.B. Flexpap, Fa. Constantia)
PET-Folie, 36µm dick, beidseitig unbehandelt, transparent. Dabei weist die Folie selbst einen Haze von 9,2 % auf. Die Folie ist z.B. erhältlich bei der Firma Mitsubishi Polyester Films. Aluminium/Polyesterverbundfolie (AIPET) der Fa. Fernholz
Die BOPP-Folie wurde über Fa. Constantia Felxibles bezogen und auf der Außenseite Corona vorbehandelt.

### Verwendetes Bechermaterial:

Polystyrol-Tiefziehfolien der Fa. Fernholz,
Amorphes Polyethylenterephthalat (APET) der Fa. Fernholz
Polypropylen (PP)-Tiefziehfolien der Fa. Fernholz

### Auftrag der Heißsiegellösung im Labor:

Die Heißsiegellösung wurde mit Handcoatern (Rakel) der Fa. MTV Messtechnik aufgezogen (24 µm und 20 µm Nassschichtdicke). Dabei wurden Trockenschichtdicken von 4 µm - 7 µm, beziehungsweise 2 - 4 µm erhalten.

### Trocknung der beschichteten Folien im Labor:

Nach kurzer Ablüftzeit (5 - 10 Minuten) wurden die Folien 15 Sekunden zwischen 120°C und 200°C im Umluftofen getrocknet.

### Heißversiegelung und Ermittlung der Siegelnahtfestigkeit:

Die Versiegelungen wurden mit dem Heißsiegelgerät (HSG/ET) der Fa. Brugger durchgeführt.

### Siegelbedingungen:

1. Versieglung von Papier/metPET-, Alu-, AIPET- und PET36-Folie gegen PS- und APET-Bechermaterialien

| | |
|---|---|
| Temperatur: | 180°C |
| Druck: | 3 bar |
| Zeit: | 0,5sec. |
| Siegelfläche: | 100 mm x 10 mm |

2. Versieglung von Papier/metPET-, Alu-, AIPET- und PET36-Folie gegen PP-Bechermaterialien

| | |
|---|---|
| Temperatur: | 200°C |
| Druck: | 6 bar |
| Zeit: | 1 sec. |

3. Versieglung von BOPP-Folie gegen APET-, PP- und PS-Bechermaterialien

| | |
|---|---|
| Temperatur: | 160°C |
| Druck: | 3 bar |
| Zeit: | 0,5 sec. |

Zur Ermittlung der Siegelnahtfestigkeit wurden Proben in 15 mm breite Streifen geschnitten und mit der Zugprüfmaschine von Instron, Modell Nr. 1195 oder Zwick, Modell Nr. 1454 bei einer Geschwindigkeit von 100 mm/min. gezogen. Es wurde darauf geachtet, dass während des Abzugsversuches die bereits voneinander getrennten Folienteile mit dem noch unbeanspruchten Rest einen Winkel von 90 °C bilden.

Die Bestimmung des Feststoffgehalts (FG) erfolgt im Trockenschrank, 1h bei 105°C.

Die Bestimmung der dynamischen Viskosität erfolgt mit dem Brookfield- Viskosimeter Typ LVDV-II+Pro bei 23°C mit der Spindel III bei 6rpm.

Die Bestimmung der Transparenz erfolgt an der 36µm PET-Folie, beschichtet mit 5 g/m² Probenmaterial, nach ASTM D1003-13 mit einem Haze-Gard Plus Gerät der Firma Byk-Gardner.

### Für die Dispersionen verwendete Materialien:

### Komponente A (Polyester):

In Tabelle 1 sind die Charakteristika der hier als Beispiele für die Komponente A verwendete Copolyester (Typ A1 und A2) aufgeführt. Es handelt sich dabei um teilaromatische, lineare Copolyester mit und ohne Itaconsäure, bezogen auf die Gesamtmenge an Polycarbonsäuren.

**Tabelle 1: Charakteristika der verwendeten Polyester**

| Polyester | Itaconsäuregehalt | T_{g} | M_{w} |
|---|---|---|---|
| Typ A1 | 3,0 Mol-% | 33 °C | 15.800 |
| Typ A2 | 0 Mol-% | 30°C | 40.900 |

Als Polyester vom Typ 1 kann z.B. DYNACOLL EP 415.02 (Fa. Evonik) eingesetzt werden.
Als Polyester vom Typ 2 kann z.B. DYNAPOL L 323 (Fa. Evonik) eingesetzt werden.

### Komponente B (zur Herstellung der Poly(meth)acrylate eingesetzte Monomere):

Methylmethacrylat (MMA), >99%, unstabilisiert der Fa. Evonik Industries AG n-Butylmethacrylat (nBMA), >99%, unstabilisiert der Fa. Evonik Industries AG Isoborneylmethacrylat (IBOMA) der Fa. Evonik Industries AG
Methacrylsäureester von hydrierten, Hydroxypropyl-terminierten Polybutadienen mit Molekulargewicht von 4.500 g/mol bis 5.000 g/mol (z.B. der Fa. Sartomer) Styrol, stabilisiert mit 10-15ppm *p*-*tert*-Butylcatechol, der Fa. Brenntag.

### Komponente C (Kautschuke):

### Verwendete Styrol-Kautschuk-Materialien

**Tabelle 2: Übersicht zu den Eigenschaften der verwendeten Kautschuktypen**

| Kautschuk | Styrolgehalt [wt%] | Struktur* | MFI [g/10min] |
|---|---|---|---|
| Typ 1 | 30 | SBS [I, B] | 10²⁾ |
| Typ 2 | 30-32 | SEBS [I, B] | 10²⁾ |
| Typ 3 | 30% | MSA-g-SEBS | 22¹⁾ |
| Typ 4 | 13 | SEB/SEBS = 30/70 | 22¹⁾ |

| | | | |
|---|---|---|---|
| *I: linear, B: Blockstruktur; 1) 230°C, 5kg, 2) 200°C, 5kg MFI: Schmelzflussindex; hierzu sei angemerkt, dass die Typen 3 und 4 auch bei 200°C gemessen einen MFI zwischen 1 und 40 g/10 min aufweisen. | | | |

Als Kautschukmaterialien des Typ 1 kann z.B. Kibiton PB 5903 der Fa. Chimei Corp. Verwendet werden.
Als Kautschukmaterialien des Typs 2 können z.B. Kraton G 1650 und G 1652 Fa. Kraton, der Fa. Versalis (Europrene SOL TH 2311 und Europrene SOL TH 2312) oder der Fa. DYNASOL (Calprene H 6120 und Calprene H 6170)
Als Kautschukmaterialien des Typs 3 werden Maleinsäureanhydrid-gepfropfte SEBS-Kautschuke mit einem Maleinsäure-Gehalt von 1,4-2.0wt%, z.B. der Fa. Kraton (FG 1901 G), eingesetzt.
Als Kautschukmaterialien des Typs 4 können Mischung aus SEB-Di- und SEBS-Triblock-Coploymer, z.B. der Fa. Kraton (G 1657 M), eingesetzt werden.

### Erfindungsgemäßes Beispiel 1

In einem Doppelmantelgefäß mit angeschlossenem Thermostaten, Rückflusskühler, Blattrührer und Innenthermometer werden 58,3 g Butylacetat und 57,5 g Makroalkoholmethacrylat bei 115°C vorgelegt und mit 1,15 g tert-Butylperoxy-2-ethylhexanoat (Peroxan PO) gelöst in 10,0 g Butylacetat initiiert. Zu dieser Lösung wird nach 5 min eine Lösung aus 23,0 g Styrol, 8,6 g MMA und 15,0 g Butylacetat über 60 min lang zu getropft. Nach 3 h werden zum erhaltenen Reaktionsgemisch 287,5 g einer Polyesterlösung, bestehend aus 35,4 g vom Polyester Typ 1, 92,0 g vom Polyester Typ 2 und 175,1 g Propylacetat, zugegeben. Nach erneutem Einstellen der Innentemperatur von 115°C wird über 60 min lang eine Lösung aus 25,9 g MMA und 0,63 g Peroxan PO in 20,0g Butylacetat zudosiert. 30 min und 90 min nach Abschluss der Dosierung wird jeweils mit 0,23 g Peroxan PO in 5,0 g Butylacetat nachiniitiert. 240 min nach der letzten Nachinitiierung wird die Reaktionsmischung abgekühlt (<30°C) und über ein Nylon-Gewebe (125 µm Maschenweite) filtriert.

### Beispiel 2

In einem Doppelmantelgefäß mit angeschlossenem Thermostaten, Rückflusskühler, Blattrührer und Innenthermometer werden in einer Lösung aus 65,6 g vom Polyester Typ 2, 22,1 g vom Polyester Typ 1 und 288,2 g Propylacetat bei 98°C 58,7 g SEBS-Kautschuk des Typs 3 über 2 h gelöst. Anschließend gibt man 0,44 g Peroxan PO, gelöst in 8,3 g Propylacetat, zur Lösung und startet bei 98°C nach weiteren 5 min die Dosierung einer Lösung aus 44,0 g MMA, 44,0 g nBMA und 1,32 g Peroxan PO in 14,6 g Propylacetat über einen Zeitraum von 90 min. Zur Vervollständigung der Polymerisation werden bei 98°C nach 30 min, 90 min und 150 min jeweils 0,176 g Peroxan PO, jeweils gelöst in 8,3 g Propylacetat, zum Reaktionsgemisch hinzu gegeben. Nach weiteren 180 min wird das Gemisch abgekühlt und über ein Nylonsieb (125 µm Maschenweite) abfiltriert.

### Beispiel 3

Die Herstellung entspricht der Vorgehensweise und der eingesetzten Rohstoffmengen wie im erfindungsgemäßen Beispiel 2. Anstelle des Kautschuks vom Typ 3 werden 51,8 g des Kautschuks vom Typ 4 gelöst und die Lösemittelmenge zum Lösen der Polyester und des Kautschuks auf 281,0 g angepasst.

### Beispiel 4

Die Herstellung entspricht der Vorgehensweise und der eingesetzten Rohstoffmengen wie im erfindungsgemäßen Beispiel 2. Anstelle des Kautschuks vom Typ 3 setzt man 58,7 g vom Typ 2 ein.

### Beispiel 5

In einem Doppelmantelgefäß mit angeschlossenem Thermostaten, Rückflusskühler, Blattrührer und Innenthermometer werden in einer Lösung aus 120,0 g Polyester Typ 2, 18,4 g Polyester Typ 1 und 464,8 g Propylacetat bei 98°C 92,25 g SEBS-Kautschuk des Typs 2 über 2 h gelöst. Anschließend gibt man 0,692 g Peroxan PO, gelöst in 13,0 g Propylacetat, zur Lösung und startet bei 98°C nach weiteren 5 min die Dosierung einer Lösung aus 69,1 g MMA, 69,1 g nBMA und 2,076 g Peroxan PO in 23,0 g Propylacetat über einen Zeitraum von 90 min. Zur Vervollständigung der Polymerisation werden bei 98°C nach 30 min, 90 min und 150 min jeweils 0,277 g Peroxan PO, jeweils gelöst in 13 g Propylacetat, zum Reaktionsgemisch hinzu gegeben. Nach weiteren 180 min wird das Gemisch abgekühlt und über ein Nylonsieb (125 µm Maschenweite) abfiltriert.

### Beispiel 6

In einem Doppelmantelgefäß mit angeschlossenem Thermostaten, Rückflusskühler, Blattrührer und Innenthermometer werden in einer Lösung aus 121,0 g Polyester Typ 2, 32,8 g Polyester Typ 1 und 511,0 g Propylacetat bei 98°C 102,5 g SEBS-Kautschuk des Typs 2 über 2 h gelöst. Anschließend gibt man 0,769 g Peroxan PO, gelöst in 13,0 g Propylacetat, zur Lösung und startet bei 98°C nach weiteren 5 min die Dosierung einer Lösung aus 84,0 g MMA, 69,7 g nBMA und 2,306 g Peroxan PO in 23,0 g Propylacetat über einen Zeitraum von 90 min. Zur Vervollständigung der Polymerisation werden bei 98°C nach 30 min, 90 min und 150 min jeweils 0,308 g Peroxan PO, jeweils gelöst in 13 g Propylacetat, zum Reaktionsgemisch hinzu gegeben. Nach weiteren 180 min wird das Gemisch abgekühlt und über ein Nylonsieb (125 µm Maschenweite) abfiltriert.

### Beispiel 7

In einem Doppelmantelgefäß mit angeschlossenem Thermostaten, Rückflusskühler, Blattrührer und Innenthermometer werden in einer Lösung aus 110,7 g Polyester Typ 2,36,9 g Polyester Typ 1 und 393,9 g Propylacetat bei 98°C 112,8 g SEBS-Kautschuk des Typs 2 über 2 h gelöst. Anschließend gibt man 0,748 g Peroxan PO, gelöst in 13,0 g Propylacetat, zur Lösung und startet bei 98°C nach weiteren 5 min die Dosierung einer Lösung aus 74,8 g MMA, 74,8 g nBMA und 2,245 g Peroxan PO in 23,0 g Propylacetat über einen Zeitraum von 90 min. Zur Vervollständigung der Polymerisation werden bei 98°C nach 30 min, 90 min und 150 min jeweils 0,299 g Peroxan PO, jeweils gelöst in 13 g Propylacetat, zum Reaktionsgemisch hinzu gegeben. Nach weiteren 180 min wird das Gemisch abgekühlt, mit 117,2 g Ethylacetat verdünnt und über ein Nylonsieb (125 µm Maschenweite) abfiltriert.

### Beispiel 8

In einem Doppelmantelgefäß mit angeschlossenem Thermostaten, Rückflusskühler, Blattrührer und Innenthermometer werden in einer Lösung aus 115,2 g Polyester Typ 2,32,8 g Polyester Typ 1 und 511,0 g Propylacetat bei 98°C 112,8 g SEBS-Kautschuk des Typs 2 über 2 h gelöst. Anschließend gibt man 0,746 g Peroxan PO, gelöst in 13,0 g Propylacetat, zur Lösung und startet bei 98°C nach weiteren 5 min die Dosierung einer Lösung aus 54,1 g MMA, 74,6 g nBMA, 20,5 g IBOMA und 2,239 g Peroxan PO in 23,0 g Propylacetat über einen Zeitraum von 90 min. Zur Vervollständigung der Polymerisation werden bei 98°C nach 30 min, 90 min und 150 min jeweils 0,298 g Peroxan PO, jeweils gelöst in 13 g Propylacetat, zum Reaktionsgemisch hinzu gegeben. Nach weiteren 180 min wird das Gemisch abgekühlt und über ein Nylonsieb (125 µm Maschenweite) abfiltriert.

### Vergleichsbeispiel VB1 (mit EPDM anstelle von Polymertyp C)

In einem Doppelmantelgefäß mit angeschlossenem Thermostaten, Rückflusskühler, Blattrührer und Innenthermometer werden 65,0 g Dutral CO 043, 26,0 g Polyester vom Typ 1 und 104,0 g Polyester vom Typ 2 sowie 120,0 g eines geeigneten Emulgators in 335 g Propylacetat sowie 60,0 g Cyclohexan (CH) vorgelegt und bei 95 °C bis zum Lösen gerührt. Anschließend wird eine Mischung aus 64,9 g Methylmethacrylat und 64,9 g Butylmethacrylat, versetzt mit 2,60 g t-Butyl-peroxy-2-ethylhexanoat und über einen Zeitraum von 1,5 h bei 95°C mittels Dosierpumpe zudosiert. Nach beendeter Zugabe werden zweimal, in einem Abstand von einer Stunde, jeweils weitere 0,26 g t-Butyl-peroxy-2-ethylhexanoat zugegeben und das Gemisch noch weitere 2 h gerührt. Das Reaktionsgemisch wird nach dem Abkühlen über ein Nylonfilter (Maschenweite 125µm) abfiltriert.

Bei Dutral CO 043 handelt es sich um ein EPDM.

### Vergleichsbeispiel VB2 (mit SBS anstelle von Polymertyp C)

Die Herstellung entspricht der Vorgehensweise und der eingesetzten Rohstoffmengen wie im erfindungsgemäßen Beispiel 2. Anstelle des Kautschuks vom Typ 3 setzt man 58,7 g des Kautschuks vom Typ 1 (SBS-Kautschuk) ein.

### Vergleichsbeispiel VB3 (ohne Polymertyp B)

In einem Doppelmantelgefäß mit angeschlossenem Thermostaten, Rückflusskühler, Blattrührer und Innenthermometer werden 113,4 g Polyester Typ 2,20,0 g Polyester Typ 1 in 300,0 g Propylacetat bei 98°C gelöst. Anschließend gibt man 66,6 g SEBS-Kautschuk des Typs 2 hinzu und löst das Gemisch über weitere 2 h. Das Reaktionsgemisch kann nach dem Abkühlen nicht über ein Nylonfilter (Maschenweite 125µm) abfiltriert werden.

### Vergleichsbeispiel VB4 (ohne Polymertyp A)

In einem Doppelmantelgefäß mit angeschlossenem Thermostaten, Rückflusskühler, Blattrührer und Innenthermometer werden 136,5 g SEBS-Kautschuk des Typs 2 bei 98°C über eine Dauer von 2 h gelöst. Zu dieser Lösung werden 1,367 g Peroxan PO, gelöst in 13,0 g Propylacetat, hinzugegeben und nach 5 min startet man die Dosierung von 136,5 g MMA, 136,9 g nBMA und 4,012 g Peroxan PO, gelöst in 23,0 g Propylacetat über einen Zeitraum von 90 min. Zur Vervollständigung der Polymerisation werden bei 98°C nach 30 min, 90 min und 150 min jeweils 0,547 g Peroxan PO, jeweils gelöst in 13 g Propylacetat, zum Reaktionsgemisch hinzu gegeben. Nach weiteren 180 min wird das Gemisch abgekühlt, zur Einstellung der Viskosität mit 267,5 g Propylacetat nachverdünnt und anschließend über ein Nylonsieb (125 µm Maschenweite) abfiltriert.

### Vergleichsbeispiel VB5 (ohne Polymertyp B)

In einem Doppelmantelgefäß mit angeschlossenem Thermostaten, Rückflusskühler, Blattrührer und Innenthermometer werden bei Raumtemperatur 66,6 g SEBS-Kautschuk des Typs 2 in 300,0 g Propylacetat vorgelegt und langsam 133,4 g vom Polyester Typ 2 hinzugegeben. Nach Erwärmen der Mischung auf 98°C wird über einen Zeit von 240 min homogenisiert. Das Reaktionsgemisch kann nach dem Abkühlen nicht über ein Nylonfilter (Maschenweite 125µm) abfiltriert werden.

### Ergebnisse der Versuche

**Tabelle 3: Eigenschaften der Eigenschaften der Beispiele:**

| **Beispiel** | **Feststoff [%]** | **dyn. Visko. [mPas]** | **Aussehen** | **Bemerkung** |
|---|---|---|---|---|
| **Bsp. 1** | 43,9 | 1400 | weiß, trüb | - |
| **Bsp. 2** | 39,9 | 4100 | schwach gelblich, milchig-trüb | - |
| **Bsp. 3** | 37,5 | 3500 | milchig-trüb | - |
| **Bsp. 4** | 40,4 | 15000 | schwach gelblich, milchig-trüb | - |
| **Bsp. 5** | 40,5 | 19000 | milchig-trüb | - |
| **Bsp. 6** | 39,1 | 25000 | milchig-trüb | - |
| **Bsp. 7** | 40 | 5900 | schwach gelblich, milchig-trüb | - |
| **Bsp. 8** | 40 | 18000 | milchig-trüb | - |
| **VB1** | 47,5 | 2900 | milchig-trüb | - |
| **VB2** | 42,5 | 3800 | schwach gelblich, milchig-trüb | - |
| **VB3** | 39,8 | 1000 | stippig, trüb, Phasenseparation | nicht filtrierbar |
| **VB4** | 32,9 | 60 | trüb, Phasenseparation | - |
| **VB5** | 39,7 | 1500 | stippig, trüb, Phasenseparation | nicht filtrierbar |

Alle hergestellten Beispiele weisen Feststoff-Viskositätsverhältnisse auf, die auf der einen Seite die Verarbeitbarkeit bei Anwendern sicherstellen und auf der anderen Seite den Anspruch erfüllen, möglichst hohe Feststoffgehalte zu realisieren. Die Vergleichsbeispiele ließen sich dagegen oft nicht weiterverarbeiten.

### Heißsiegeleigenschaften

**Tabelle 4: Heißsiegelnahtfestigkeiten der erfindungsgemäßen Beispiele, gesiegelt gegen PS-Bechermaterial**

| **Folie** | **Beispiel** | **Bsp. 1** | **Bsp. 2** | **Bsp. 3** | **Bsp. 4** |
|---|---|---|---|---|---|
| **Papier/metPET** | HSF [N/15mm] | 2,9 | 8,1 | 8,9 | 7,8 |
| | Siegelbild | gleichm. | I. ruppig | rel. gl. | ruppig |
| **Alu-Folie** | HSF [N/15mm] | 2,3 | 6,8 | 9,7 | 11,4 |
| | Siegelbild | gleichm. | rel. gl. | rel. gl. | I. ruppig |
| **AIPET** | HSF [N/15mm] | 3,2 | 7 | 8,1 | 9,4 |
| | Siegelbild | gleichm. | rel. gl. | ruppig | ruppig |
| **PET36*** | HSF [N/15mm] | 2,7 | 6,5 | 6,3 | 5,8 |
| | Siegelbild | gleichm. | ruppig | ruppig | ruppig |
| | Transparenz [%Haze] | 15,4 | 17 | 11,3 | 16,7 |
| | | | | | |

| **Folie** | **Beispiel** | **Bsp. 5** | **Bsp. 6** | **Bsp. 7** | **Bsp. 8** |
|---|---|---|---|---|---|
| **Papier/metPET** | HSF [N/15mm] | 8,2 | 7,7 | 8,1 | 8,3 |
| | Siegelbild | ruppig | ruppig | ruppig | rel. gl. |
| **Alu-Folie** | HSF [N/15mm] | 9,3 | 11,6 | 10,4 | 9,8 |
| | Siegelbild | I. ruppig | rel. gl. | rel. gl. | gleichm. |
| **AIPET** | HSF [N/15mm] | 8,5 | 9,2 | 8,9 | 8,4 |
| | Siegelbild | I. ruppig | ruppig | ruppig | rel. gl. |
| **PET36*** | HSF [N/15mm] | 6,2 | 6 | 7,3 | 6,4 |
| | Siegelbild | ruppig | ruppig | ruppig | ruppig |
| | Transparenz [%Haze] | 7,7 | 17,9 | 17,6 | 12,8 |

| | | | | | |
|---|---|---|---|---|---|
| * PET36 Film wurde zur Bestimmung der Siegelnahtfestigkeit mit TESA-Film stabilisiert rel. gl. = relativ gleichmäßig, gleichm. = gleichmäßig, I. ruppig = leicht ruppig | | | | | |

**Tabelle 5: Heißsiegelnahtfestigkeiten der Vergleichsbeispiele, gesiegelt gegen PS-Bechermaterial**

| **Folie** | **Beispiel** | **VB1** | **VB2** | **VB3** | **VB4** | **VB5** |
|---|---|---|---|---|---|---|
| **Papier/metPET** | HSF [N/15mm] | 6,6 | 1,5 | 3 | <1, DL | 2,3 |
| | Siegelbild | gleichm. | I. ruppig | ruppig | I. ruppig | ruppig |
| **Alu-Folie** | HSF [N/15mm] | 7,1 | 4,7 | 4,4 | 2 | 5,4 |
| | Siegelbild | gleichm. | rel. gl. | rel. gl. | gleichm. | I. ruppig |
| **AIPET** | HSF [N/15mm] | 7,2 | 2,1 | 4,5 | <1, DL | 4,3 |
| | Siegelbild | gleichm. | rel. gl. | rel. gl. | rel. gl. | I. ruppig |
| **PET36*** | HSF [N/15mm] | 5,5 | <1 | 2,6 | <1 | 1,4 |
| | Siegelbild | gleichm. | n.b. | ruppig | n.b. | ruppig |
| | Transparenz [%Haze] | 26 | 11,5 | 13,2 | 9,5 | 12,6 |

| | | | | | | |
|---|---|---|---|---|---|---|
| * PET36 Film wurde zur Bestimmung der Siegelnahtfestigkeit mit TESA-Film stabilisiert rel. gl. = relativ gleichmäßig, gleichm. = gleichmäßig, I. ruppig = leicht ruppig DL = Delamination der Siegelschicht vom Filmmaterial | | | | | | |

**Tabelle 6: Heißsiegelnahtfestigkeiten der erfindungsgemäßen Beispiele gegen APET-Becher**

| **Folie** | **Beispiel** | **Bsp. 1** | **Bsp. 2** | **Bsp. 3** | **Bsp. 4** |
|---|---|---|---|---|---|
| **Papier/metPET** | HSF [N/15mm] | 2,7 | 7,5 | 8,6 | 6,2 |
| | Siegelbild | gleichm. | I. ruppig | I. ruppig | ruppig |
| **Alu-Folie** | HSF [N/15mm] | 2,5 | 6,1 | 8,5 | 10,2 |
| | Siegelbild | gleichm. | rel. gl. | rel. gl. | I. ruppig |
| **AIPET** | HSF [N/15mm] | 3,4 | 8,1 | 8,2 | 6,9 |
| | Siegelbild | gleichm. | rel. gl. | rel. gl. | ruppig |
| **PET36*** | HSF [N/15mm] | 2,8 | 5,7 | 6,0 | 5,0 |
| | Siegelbild | gleichm. | ruppig | ruppig | ruppig |
| | Transparenz [%Haze] | 15,4 | 17 | 11,3 | 16,7 |
| | | | | | |

| **Folie** | **Beispiel** | **Bsp. 5** | **Bsp. 6** | **Bsp. 7** | **Bsp. 8** |
|---|---|---|---|---|---|
| **Papier/metPET** | HSF [N/15mm] | 6,9 | 7,6 | 7,8 | 6,8 |
| | Siegelbild | ruppig | I. ruppig | ruppig | ruppig |
| **Alu-Folie** | HSF [N/15mm] | 9,7 | 10,7 | 11,3 | 9,6 |
| | Siegelbild | I. ruppig | rel. gl. | rel. gl. | rel. gl. |
| **AIPET** | HSF [N/15mm] | 7,9 | 8,1 | 9,4 | 7,6 |
| | Siegelbild | I. ruppig | rel. gl. | ruppig | I. ruppig |
| **PET36*** | HSF [N/15mm] | 4,6 | 5,8 | 6,3 | 5,4 |
| | Siegelbild | ruppig | ruppig | ruppig | ruppig |
| | Transparenz [%Haze] | 7,7 | 17,9 | 17,6 | 12,8 |

| | | | | | |
|---|---|---|---|---|---|
| * PET36 Film wurde zur Bestimmung der Siegelnahtfestigkeit mit TESA-Film stabilisiert rel. gl. = relativ gleichmäßig, gleichm. = gleichmäßig, I. ruppig = leicht ruppig | | | | | |

**Tabelle 7: Heißsiegelnahtfestigkeiten der Vergleichsbeispiele gegen APET-Becher**

| **Folie** | **Beispiel** | **VB1** | **VB2** | **VB3** | **VB4** | **VB5** |
|---|---|---|---|---|---|---|
| **Papier/metPET** | HSF [N/15mm] | 7,0 | 1,0 | 4,6 | <1, DL | 6,5, DL |
| | Siegelbild | gleichm. | I. ruppig | ruppig | I. ruppig | ruppig |
| **Alu-Folie** | HSF [N/15mm] | 8,1 | 3,3 | 4,2 | 3,1 | 5,6 |
| | Siegelbild | gleichm. | rel. gl. | ruppig | I. ruppig | I. ruppig |
| **AIPET** | HSF [N/15mm] | 7,8 | 1,9 | 7, DL | <1, DL | 7,2, DL |
| | Siegelbild | gleichm. | rel. gl. | I. ruppig | rel. gl. | I. ruppig |
| **PET36*** | HSF [N/15mm] | 5,1 | <1 | 4,3, DL | <1 | 2,5, DL |
| | Siegelbild | gleichm. | n.b. | I. ruppig | n.b. | ruppig |
| | Transparenz [%Haze] | 26 | 11,5 | 13,2 | 9,5 | 12,6 |

| | | | | | | |
|---|---|---|---|---|---|---|
| * PET36 Film wurde zur Bestimmung der Siegelnahtfestigkeit mit TESA-Film stabilisiert rel. gl. = relativ gleichmäßig, gleichm. = gleichmäßig, I. ruppig = leicht ruppig DL = Delamination der Siegelschicht vom Filmmaterial | | | | | | |

**Tabelle 8: Heißsiegeleigenschaften von Bsp. 2 gesiegelt gegen PP-Becher**

| **Folie** | **PET36** | **Alu-Folie** | **AIPET** |
|---|---|---|---|
| HSF [N/15mm] | 4,3 | 6,1 | 4,2 |
| Siegelbild | rel. gl. | gleichm. | gleichm. |

**Tabelle 9: Heißsiegeleigenschaften von Bsp. 2 auf Corona-behandelter BOPP-Folie**

| **Becher** | **PS** | **PP** | **APET** |
|---|---|---|---|
| HSF [N/15mm] | 5,9 | <1 | 3,5 |
| Siegelbild | gleichm. | n.b. | gleichm. |

## Patentansprüche

1. Heißsiegelfähiges, zur Versiegelung verschiedenartiger Untergründe geeignetes Beschichtungssystem, enthaltend eine filmbildende Dispersion, **dadurch gekennzeichnet, dass** diese Dispersion insgesamt zwischen 25 Gew% und 65 Gew% einer Mischung aus den Komponenten A, B und C aufweist, wobei diese Mischung aus
zwischen 15 Gew% und 50 Gew% eines Polyesters oder ein Polyestergemischs als Polymertyp A,
zwischen 15 Gew% und 50 Gew% eines Poly(meth)acrylats oder Gemischs aus mehreren Poly(meth)acrylaten als Polymertyp B und
zwischen 15 Gew% und 40 Gew% eines oder mehrerer Kautschuke, aufweisend Styrol-Wiederholungseinheiten als Polymertyp C,
jeweils bezogen auf die Gesamtmasse der Polymertypen A, B und C besteht, wobei die Komponenten A, B und/oder C auch ganz oder teilweise als Pfropfcopolymere AB oder CB vorliegen können,
dass der Feststoffgehalt der Dispersion zwischen 25 und 70 Gew% beträgt,
und dass es sich bei der Komponente C um ein SEBS, ein SEB, um ein mit Acrylsäure, Methacrylsäure. Maleinsäure und/oder Maleinsäureanhydrid bepfropftes SEBS, um ein Mischung aus SEBS und SEB oder um ein Copolymer, überwiegend bestehend aus Styrol, sowie (Meth)acrylatestern eines Fettalkohols mit mindestens 12 Kohlenstoffatomen oder eines hydrierten, hydroxy-terminierten Polybutadiens handelt..

2. Beschichtungssystem gemäß Anspruch 1, **dadurch gekennzeichnet, dass** es sich bei dem Polymertyp A um einem Polyester A1 mit einem zahlenmittleren Molekulargewicht Mₙ zwischen 700 und 5000 g/mol, der unter Copolykondensation von Itaconsäure hergestellt wurde, einem Polyester A2 mit einem zahlenmittleren Molekulargewicht Mₙ zwischen 5000 und 50000 g/mol, der keine Doppelbindungen aufweist oder um eine Mischung aus den beiden Polyestern A1 und A2 handelt.

3. Beschichtungssystem gemäß Anspruch 2, **dadurch gekennzeichnet, dass** eine Mischung der beiden Polyester A1 und A2 vorliegt, wobei Polyester A1 ein zahlenmittleres Molekulargewicht Mₙ zwischen 2000 und 4000 g/mol aufweist, dass Polyester A2 ein zahlenmittleres Molekulargewicht Mₙ zwischen 10000 und 35000 g/mol aufweist, und dass das Beschichtungssystem bezogen auf die Gesamtmasse der Polymertypen A, B, C, inklusive der potentiellen Bestandteile AB und CB zwischen 1 Gew% und 15 Gew% des Polyesters A1 und zwischen 10 Gew% und 50 Gew% des Polyesters A2 enthält.

4. Beschichtungssystem gemäß mindestens einem der Ansprüche 2 oder 3, **dadurch gekennzeichnet, dass** der Itaconsäure aufweisende Polyester A1 einen Anteil an Itaconsäure bezogen auf die Gesamtmenge an eingesetzten Polycarbonsäuren zwischen 0,1 und 20 Mol%, bevorzugt zwischen 2 und 8 Mol% aufweist.

5. Beschichtungssystem gemäß mindestens einem der Ansprüche 1 bis 4, **dadurch gekennzeichnet, dass** es sich bei den Polymertypen AB und CB um Pfropfcopolymere mit einer Polyester- bzw. Kautschukhauptkette und Poly(meth)acrylatseitenketten handelt.

6. Beschichtungssystem gemäß Anspruch 1, **dadurch gekennzeichnet, dass** Komponente C einen Anteil an Styrol-Wiederholungseinheiten zwischen 8 und 45 Gew% aufweist.

7. Beschichtungssystem gemäß Anspruch 1 oder 6, **dadurch gekennzeichnet, dass** Komponente C einen Schmelzflussindex, gemessen unter 5 kg bei einer Temperatur von 200 °C gemäß ISO 1133-1 zwischen 1 und 40 g/10 min, bevorzugt zwischen 4 und 10 g/10 min aufweist.

8. Beschichtungssystem gemäß mindestens einem der Ansprüche 1 bis 7, **dadurch gekennzeichnet, dass** diese Dispersion insgesamt zwischen 35 Gew% und 60 Gew% einer Mischung aus den Komponenten A, B und C aufweist, wobei diese Mischung aus
zwischen 25 Gew% und 45 Gew% eines Polyesters oder ein Polyestergemischs als Polymertyp A,
zwischen 25 Gew% und 45 Gew% eines Poly(meth)acrylats oder Gemischs aus mehreren Poly(meth)acrylaten als Polymertyp B und
zwischen 20 Gew% und 35 Gew% eines oder mehrerer Kautschuke, aufweisend Styrol-Wiederholungseinheiten als Polymertyp C, jeweils bezogen auf die Gesamtmasse der Polymertypen A, B und C besteht.

9. Beschichtungssystem gemäß mindestens einem der Ansprüche 1 bis 8, **dadurch gekennzeichnet, dass** diese Dispersion insgesamt zwischen 40 Gew% und 55 Gew% einer Mischung aus den Komponenten A, B und C aufweist, wobei diese Mischung aus
zwischen 30 Gew% und 40 Gew% eines Polyesters oder ein Polyestergemischs als Polymertyp A,
zwischen 30 Gew% und 40 Gew% eines Poly(meth)acrylats oder Gemischs aus mehreren Poly(meth)acrylaten als Polymertyp B und
zwischen 25 Gew% und 30 Gew% eines oder mehrerer Kautschuke, aufweisend Styrol-Wiederholungseinheiten als Polymertyp C, jeweils bezogen auf die Gesamtmasse der Polymertypen A, B und C besteht.

10. Beschichtungssystem gemäß mindestens einem der Ansprüche 1 bis 9, **dadurch gekennzeichnet, dass** es sich bei dem Polymertyp B um ein Copolymer, erhalten durch die Copolymerisation einer Monomermischung, bestehend aus Komponenten ausgewählt aus (Meth)acrylsäure, Hydroxyethyl(meth)acrylat, Hydroxypropyl(meth)acrylat, Methyl(meth)acrylat, n- und/oder iso-Proyl(meth)acrylat, n-Butyl(meth)acrylat und C8- bis C22-Fettalkoholestern der (Meth)acrylsäure.

11. Verfahren zur Versiegelung von Polyesterfolien bzw. PET-beschichteten Folie gegen Polystyrol, Polyester und Polyvinylchlorid, **dadurch gekennzeichnet, dass** die Folie mit einem Beschichtungssystemen gemäß einem der Ansprüche 1 bis 10 beschichtet wird, die Beschichtung getrocknet wird, die beschichtete Seite der Folie auf das zu versiegelnde Material aus Polystyrol, Polyester oder PVC aufgelegt wird und bei einer Temperatur zwischen 120 und 220 °C und einem Druck zwischen 1 und 6 bar über einen Zeitraum zwischen 0,1 und 1,5 s versiegelt wird.

## Claims

1. Heat-sealable coating system suitable for the sealing of various types of substrates and comprising a film-forming dispersion, **characterized in that** this dispersion comprises a total of from 25% by weight to 65% by weight of a mixture of components A, B and C, where this mixture is composed of
from 15% to 50% by weight of a polyester or polyester mixture as polymer type A,
from 15% to 50% by weight of a poly (meth) acrylate or mixture of two or more poly (meth) acrylates as polymer type B and
from 15% to 40% by weight of one or more rubbers comprising repeating styrene units as polymer type C, based in each case on the entire composition of the polymer types A, B and C, where components A, B and/or C can also entirely or to some extent take the form of graft copolymers AB or CB,
**in that** the solids content of the dispersion is from 25 to 70% by weight,
and **in that** component C is an SEBS, an SEB, is an SEBS grafted with acrylic acid, with methacrylic acid, with maleic acid and/or with maleic anhydride, is a mixture of SEBS and SEB or is a copolymer predominantly composed of styrene and also of (meth)acrylate esters of a fatty alcohol having at least 12 carbon atoms or of a hydrogenated, hydroxy-terminated polybutadiene.

2. Coating system according to Claim 1, **characterized in that** the polymer type A is a polyester A1 with number-average molar mass Mₙ from 700 to 5000 g/mol produced with copolycondensation of itaconic acid, a polyester A2 with number-average molar mass Mₙ from
5000 to 50 000 g/mol having no double bonds or a mixture of the two polyesters A1 and A2.

3. Coating system according to Claim 2, **characterized in that** there is a mixture of the two polyesters A1 and A2, where the number-average molar mass Mₙ of polyester A1 is from 2000 to 4000 g/mol, that the number-average molar mass Mₙ of polyester A2 is from 10 000 to 35 000 g/mol, and that the coating system comprises, based on the entire composition of the polymer types A, B, C, inclusive of the potential constituents AB and CB, from 1% by weight to 15% by weight of the polyester A1 and from 10% by weight to 50% by weight of the polyester A2.

4. Coating system according to at least one of Claims 2 and 3, **characterized in that** the itaconic-acid-containing polyester A1 comprises a proportion of from 0.1 to 20 mol%, preferably from 2 to 8 mol%, of itaconic acid, based on the total quantity of polycarboxylic acids used.

5. Coating system according to at least one of Claims 1 to 4, **characterized in that** the polymer types AB and CB are graft copolymers having a main chain made of polyester and, respectively, made of rubber, and having pendant chains made of poly(meth)acrylate.

6. Coating system according to Claim 1, **characterized in that** component C comprises a proportion of from 8 to 45% by weight of repeating styrene units.

7. Coating system according to Claim 1 or 6, **characterized in that** the melt flow index of component C, measured with 5 kg load at a temperature of 200°C in accordance with ISO 1133-1, is from 1 to 40 g/10 min, preferably from 4 to 10 g/10 min.

8. Coating system according to at least one of Claims 1 to 7, **characterized in that** this dispersion comprises, in total, from 35% by weight to 60% by weight of a mixture of components A, B and C, where this mixture is composed of from 25% by weight to 45% by weight of a polyester or polyester mixture as polymer type A,
from 25% by weight to 45% by weight of a poly(meth)acrylate or mixture of two or more poly(meth)acrylates as polymer type B and from 20% by weight to 35% by weight of one or more rubbers comprising repeating styrene units as polymer type C, based in each case on the entire composition of the polymer types A, B and C.

9. Coating system according to at least one of Claims 1 to 8, **characterized in that** this dispersion comprises, in total, from 40% by weight to 55% by weight of a mixture of components A, B and C, where this mixture is composed of from 30% by weight to 40% by weight of a polyester or polyester mixture as polymer type A,
from 30% by weight to 40% by weight of a poly(meth)acrylate or mixture of two or more poly(meth)acrylates as polymer type B and from 25% by weight to 30% by weight of one or more rubbers comprising repeating styrene units as polymer type C, based in each case on the entire composition of the polymer types A, B and C.

10. Coating system according to at least one of Claims 1 to 9, **characterized in that** the polymer type B is a copolymer obtained via copolymerization of a monomer mixture composed of components selected from (meth)acrylic acid, hydroxyethyl (meth)acrylate, hydroxypropyl (meth)acrylate, methyl (meth)acrylate, n- and/or isopropyl (meth)acrylate, n-butyl (meth)acrylate and C8- to C22-fatty alcohol esters of (meth)acrylic acid.

11. Process for the sealing of polyester foils or PET-coated foil with respect to polystyrene, polyester and polyvinyl chloride, **characterized in that** the foil is coated with a coating system according to any of Claims 1 to 10, the coating is dried, and the coated side of the foil is placed onto the material that is to be sealed, made of polystyrene, polyester or PVC, and is sealed at a temperature of from 120 to 220°C and under a pressure of from 1 to 6 bar for a period of from 0.1 to 1.5 s.

## Revendications

1. Système de revêtement thermoscellable, approprié pour le scellement de divers supports, contenant une dispersion filmogène, **caractérisé en ce que** cette dispersion présente au total entre 25% en poids et 65% en poids d'un mélange des composants A, B et C, ce mélange étant constitué par
entre 15% en poids et 50% en poids d'un polyester ou d'un mélange de polyesters comme type de polymère A,
entre 15% en poids et 50% en poids d'un poly(méth)acrylate ou d'un mélange de plusieurs poly(méth)acrylates comme type de polymère B et
entre 15% en poids et 40% en poids d'un ou de plusieurs caoutchoucs, présentant des motifs récurrents de type styrène comme type de polymère C,
à chaque fois par rapport à la masse totale des types de polymère A, B et C, les composants A, B et/ou C pouvant également se trouver totalement ou partiellement sous forme de copolymères greffés AB ou CB, **en ce que** la teneur en solides de la dispersion est située entre 25 à 70% en poids.
et **en ce qu'**il s'agit, pour le composant C, d'un SEBS, d'un SEB, d'un SEBS greffé par l'acide acrylique, l'acide méthacrylique, l'acide maléique et/ou l'anhydride de l'acide maléique, d'un mélange de SEBS et de SEB ou d'un copolymère, principalement constitué par du styrène, ainsi que d'esters de (méth)acrylate d'un alcool gras comprenant au moins 12 atomes de carbone ou d'un polybutadiène hydrogéné, terminé par hydroxyle.

2. Système de revêtement selon la revendication 1, **caractérisé en ce qu'**il s'agit, pour le type de polymère A, d'un polyester A1 présentant un poids moléculaire moyen en nombre Mₙ entre 700 et 5000 g/mole, qui a été préparé sous polycondensation d'acide itaconique, d'un polyester A2 présentant un poids moléculaire moyen en nombre Mₙ entre 5000 et 50.000 g/mole, qui ne présente pas de doubles liaisons ou d'un mélange des deux polyesters A1 et A2.

3. Système de revêtement selon la revendication 2, **caractérisé en ce qu'**on est en présence d'un mélange des deux polyesters A1 et A2, le polyester A1 présentant un poids moléculaire moyen en nombre Mₙ entre 2000 et 4000 g/mole, **en ce que** le polyester A2 présente un poids moléculaire moyen en nombre Mₙ entre 10.000 et 35.000 g/mole et **en ce que** le système de revêtement contient, par rapport à la masse totale des types de polymère A, B, C, y compris les constituants potentiels AB et CB, entre 1% en poids et 15% en poids du polyester A1 et entre 10% en poids et 50% en poids du polyester A2.

4. Système de revêtement selon au moins l'une quelconque des revendications 2 ou 3, **caractérisé en ce que** le polyester A1 présentant de l'acide itaconique présente une proportion d'acide itaconique, par rapport à la quantité totale de poly(acides carboxyliques) utilisée, entre 0,1 et 20% en mole, de préférence entre 2 et 8% en mole.

5. Système de revêtement selon au moins l'une quelconque des revendications 1 à 4, **caractérisé en ce qu'**il s'agit, pour les types de polymère AB et CB, de polymères greffés présentant une chaîne principale de polyester ou de caoutchouc et des chaînes latérales de poly(méth)acrylate.

6. Système de revêtement selon la revendication 1, **caractérisé en ce que** le composant C présente une proportion de motifs récurrents de styrène entre 8 et 45% en poids.

7. Système de revêtement selon la revendication 1 ou 6, **caractérisé en ce que** le composant C présente un indice de fluidité à chaud, mesuré sous 5 kg à une température de 200°C selon la norme ISO 1133-1, entre 1 et 40 g/10 min, de préférence entre 4 et 10 g/10 min.

8. Système de revêtement selon au moins l'une quelconque des revendications 1 à 7, **caractérisé en ce que** cette dispersion présente au total entre 35% en poids et 60% en poids d'un mélange des composants A, B et C, ce mélange étant constitué par
entre 25% en poids et 45% en poids d'un polyester ou d'un mélange de polyesters comme type de polymère A,
entre 25% en poids et 45% en poids d'un poly(méth)acrylate ou d'un mélange de plusieurs poly(méth)acrylates comme type de polymère B et
entre 20% en poids et 35% en poids d'un ou de plusieurs caoutchoucs, présentant des motifs récurrents de type styrène comme type de polymère C, à chaque fois par rapport à la masse totale des types de polymère A, B et C.

9. Système de revêtement selon au moins l'une quelconque des revendications 1 à 8, **caractérisé en ce que** cette dispersion présente au total entre 40% en poids et 55% en poids d'un mélange des composants A, B et C, ce mélange étant constitué par
entre 30% en poids et 40% en poids d'un polyester ou d'un mélange de polyesters comme type de polymère A,
entre 30% en poids et 40% en poids d'un poly(méth)acrylate ou d'un mélange de plusieurs poly(méth)acrylates comme type de polymère B et
entre 25% en poids et 30% en poids d'un ou de plusieurs caoutchoucs, présentant des motifs récurrents de type styrène comme type de polymère C, à chaque fois par rapport à la masse totale des types de polymère A, B et C.

10. Système de revêtement selon au moins l'une quelconque des revendications 1 à 9, **caractérisé en ce qu'**il s'agit, pour le type de polymère B, d'un copolymère, obtenu par copolymérisation d'un mélange de monomères constitué par des composants choisis parmi l'acide (méth)acrylique, le (méth)acrylate d'hydroxyéthyle, le (méth)acrylate d'hydroxypropyle, le (méth)acrylate de méthyle, le (méth)acrylate de n-propyle et/ou d'iso-propyle, le (méth)acrylate de n-butyle et les esters d'alcools gras en C8-C22 de l'acide (méth) acrylique.

11. Procédé pour le scellement de feuilles de polyester ou d'une feuille revêtue de PET contre du polystyrène, du polyester et du poly(chlorure de vinyle), **caractérisé en ce que** la feuille est revêtue par un système de revêtement selon l'une quelconque des revendications 1 à 10, le revêtement est séché, le côté revêtu de la feuille est placé sur le matériau à sceller en polystyrène, en polyester ou en PVC et scellé à une température entre 120 et 220°C et à une pression entre 1 et 6 bars pendant une période de temps entre 0,1 et 1,5 seconde.
